# EUROPEAN PATENT SPECIFICATION

(11) **EP 0 953 761 B1**
(45) Date of publication and mention of the grant of the patent: **30.06.2004**
(21) Application number: 99108247.0
(22) Date of filing: 27.04.1999
(51) Int. Cl.: F02M 35/108

(54) **Internal combustion engine with auxiliary intake passage**
Brennkraftmaschine mit Hilfseinlasskanal
Moteur à combustion interne avec canal auxiliaire d'admission

(30) Priority: 27.04.1998 JP 11722498
(43) Date of publication of application: 03.11.1999
(73) Proprietor: YAMAHA HATSUDOKI KABUSHIKI KAISHA, Iwata-shi Shizuoka-ken (JP)
(72) Inventor: Kondo, Takeo, Iwata-shi, Shizuoka-ken (JP); Iida, Yoshikatsu, Iwata-shi, Shizuoka-ken (JP); Saito, Toshihiko, Iwata-shi, Shizuoka-ken (JP)
(74) Representative: Grünecker, Kinkeldey, Stockmair & Schwanhäusser Anwaltssozietät

(56) References cited:
- EP-A- 0 221 312
- WO-A-97/11270
- FR-A- 2 685 382
- US-A- 4 304 211
- PATENT ABSTRACTS OF JAPAN vol. 006, no. 240 (M-174), 27 November 1982 (1982-11-27) & JP 57 137618 A (TOYOTA JIDOSHA KOGYO KK), 25 August 1982 (1982-08-25)

## Description

This invention relates to an internal combustion engine according to the preamble part of the independent claim 1.

There has been considered a type of intake device a four-cycle engine which employs a fuel injection valve to supply fuel to the intake passage or combustion chamber, and a throttle valve disposed on the upstream side of the fuel injection valve to variably control the intake flow rate. As such a type, there is one comprising: an auxiliary intake passage to communicate between a surge tank disposed on the upstream side of a throttle valve in the intake passage and a location near the intake valve, and a flow rate control valve in the passage, with both of the flow rate control valve and the throttle valve being connected to an accelerator pedal (refer to JP-A-53-117119).

With the above-described conventional device, it is possible to produce turbulence in the cylinder bore in the operation range where the accelerator pedal travel is small as during a cold start or warm-up operation by increasing the intake flow rate through the auxiliary intake passage. Therefore, it is believed that, when the air-fuel ratio is set to be lean, the exhaust gas property is improved while securing combustion stability.

With the above-described device comprising the auxiliary intake passage interlocked with the accelerator pedal, however, the opening degree of the flow rate control valve in the auxiliary intake passage is widely open even after the end of the warm-up operation in the idling operation range. As a result, the intake flow rate through the auxiliary intake passage in the idling operation range is high and leads to a problem that the idling speed is difficult to stabilize. Another problem is a concern that the exhaust gas property might deteriorate if the turbulence is caused to occur in the case the theoretical air-fuel ratio of λ = 1 is made a control target in such an operation range of low speed and low load because fuel is likely to adhere to the cylinder inside wall.

US 4,304,211 discloses an internal combustion engine as indicated above.

It is an objective of the invention to improve an internal combustion engine as indicated above so as to be capable of stabilizing an idling speed in an idling operation range after the end of the warm-up operation.

According to the present invention this objective is solved by an internal combustion engine comprising an intake device, a fuel injection valve for injecting fuel into an intake passage or a combustion chamber, a throttle valve disposed on an upstream side of the fuel injection valve to variably control an intake flow rate through the intake passage, and an auxiliary intake passage for leading the intake flow rate to a part of the intake passage on the upstream side of an intake valve opening by interconnecting a part of the intake passage on the upstream side of the throttle valve and a part of the intake passage on the upstream side of the intake valve opening to produce intake turbulence in the cylinder bore,
wherein the intake device further comprises an idling passage for bypassing the throttle valve when the throttle valve is in an idling position and an idling speed control valve for variably controlling the intake flow rate through the idling passage.

The intake device may further comprise
an auxiliary intake control valve for variably controlling the intake flow rate through the auxiliary intake passage; and
a control valve controlling means for controlling the opening degree of the auxiliary intake control valve to the opening degree commensurate with the operation state of the engine.

The fuel injection valve may be disposed to inject fuel toward the intake valve opening, and the downstream end opening of the auxiliary intake passage may be disposed at the part of the intake passage in the vicinity of the intake valve opening to lead the intake with a directionality to the combustion chamber so that turbulence is produced in the combustion chamber.

The control valve controlling means may control the opening degree of the idling speed control valve and the auxiliary intake control valve may commensurate with the engine operation state.

The control valve controlling means may control the opening degree of the auxiliary intake control valve and the idling speed control valve so that the intake flow rate is greater through the auxiliary intake passage than through the idling passage and the air-fuel ratio is leaner than the stoichiometric air/fuel ratio in the operation range where occurrence of turbulence in the combustion chamber is required as during a cold start and warm-up operation.

The fuel injection valve may be disposed to inject fuel toward the intake valve opening, and the downstream end opening of the auxiliary intake passage may be disposed on the upstream side of the fuel injection valve so that the intake from the opening flows along the auxiliary intake passage wall surface.

The control valve controlling means may control the opening degree of the auxiliary intake control valve so that the intake flow rate through the auxiliary intake passage is greater during the cold start and warm-up operation than after the end of the warm-up operation and that the air-fuel ratio is greater than the stoichiometric air/fuel ratio.

The control valve controlling means may control the opening degree of the auxiliary intake air control valve so that the intake flow rate through the auxiliary intake passage is appropriate for maintaining a specified idling speed and that the air-fuel ratio is approximately equal to the stoichiometric air/fuel ratio.

According to the invention, since auxiliary intake control valve for controlling the intake flow rate through the auxiliary intake passage is provided and the opening degree of the auxiliary intake control valve is controlled to the opening degree commensurate with the engine operation state, the exhaust gas property in the cold operation range is improved depending on the setting of the target opening degree for the control, the idling speed after the end of the warm-up operation is stabilized, and the problem of deterioration in the exhaust gas property can be avoided.

Specifically, for example with the additional feature in which the intake flow rate through the auxiliary intake passage disposed to define the intake flow direction is made greater in the cold operation range requiring intake turbulence than in the normal idling operation, eddy can be formed in the cylinder bore so as to produce turbulence such as swirl and tumble, stabilized combustion can be achieved while setting the air-fuel ratio to a lean value, and the exhaust gas property can be improved with reduced amount of HC and CO in the cold operation range.

Since the idling speed control valve for controlling the intake flow rate through the idling passage and the auxiliary intake control valve for controlling the intake flow rate through the auxiliary intake passage are provided, and the opening degree of both of the control valves are controlled to the opening degrees commensurate with the engine operation state, the exhaust gas property in the cold operation range is improved, the idling speed after the end of the warm-up operation is stabilized, the problem of deterioration in the exhaust gas property is avoided depending on the setting of the target opening degree for the control.

Specifically, for example with said additional feature in which the intake flow rate through the auxiliary intake passage disposed to define the intake flow direction is increased in the cold operation range requiring intake turbulence than in the normal idling operation, eddy is formed in the cylinder bore so as to produce turbulence such as swirl and tumble, stabilized combustion is achieved while setting the air-fuel ratio to a lean value, and the exhaust gas property is improved with reduced amount of HC and CO in the cold operation range.

Since the fuel injection valve is disposed to inject fuel to the intake valve opening, and the downstream end opening of the auxiliary intake passage is disposed on the upstream side of the fuel injection valve so that the intake from the opening flows along the auxiliary intake passage wall surface, it is possible to produce turbulence in the intake in the intake passage, to draw the intake in which the turbulence still remains into the combustion chamber during the intake stroke, to accelerate mixing of fuel with air and evaporation of fuel by injecting fuel into the intake in which the turbulence in the intake passage is still being produced, to improve the exhaust gas property in the cold operation range, to stabilize the idling speed after the end of the warm-up operation, and to avoid the problem of deterioration in the exhaust gas property.

Specifically, for example with the feature in which the control valve controlling means controls the opening degree of the auxiliary intake control valve so that the intake flow rate through the auxiliary intake passage is greater during the cold start and warm-up operation than after the end of the warm-up operation and that the air-fuel ratio is greater than the theoretical value, it is possible to produce intake turbulence in the intake passage, to achieve stabilized combustion while setting the air-fuel ratio to a lean value, and to improve the exhaust gas property with reduced amount of HC and CO in the cold operation range,

According to the embodiment with the additional feature in which the control valve controlling means controls the opening degree of the auxiliary intake air control valve so that the intake flow rate through the auxiliary intake passage is appropriate for maintaining a specified idling speed and that the air-fuel ratio is approximately equal to the stoichiometric value, it is possible to produce intake turbulence in the intake passage, and to stabilize the idling speed with stabilized combustion.

Hereinafter, the present invention is illustrated and explained in greater detail by means of preferred embodiments of the invention in conjunction with accompanying drawings, wherein:
FIG. 1 shows an overall constitution of the internal combustion engine according to the present invention.
FIG, 2 is an explanatory plan view of the intake device of the internal combustion engine.
FIG. 3 is a control characteristic chart for explaining the operation of the intake device of the internal combustion engine.
FIG. 4 is a flow chart for explaining the operation of the intake device of the internal combustion engine.
FIG. 5 is a flow chart for explaining the operation of the intake device of the internal combustion engine.
FIG. 6 is a flow chart for explaining the operation of the intake device of the internal combustion engine.
FIG. 7 is a flow chart for explaining the operation of the intake device of the internal combustion engine.
FIG. 8 is a flow chart for explaining the operation of the intake device of the internal combustion engine.
FIG. 9 is a flow chart for explaining the operation of the intake device of the internal combustion engine.
FIG 10 shows an overall constitution of the intake device for an engine which does not fall under the scope of the present invention.
FIG. 11 is an explanatory plan view of the intake device.
FIG. 12 is a flow chart for explaining the operation of the intake device.
FIG. 13 is a flow chart for explaining the operation of the intake device.
FIG. 14 is a flow chart for explaining the operation of the intake device.
FIG. 15 is a flow chart for explaining the operation of the intake device.
FIG. 16 is a flow chart for explaining the operation of the intake device.
FIG. 17 is an explanatory plan view of a modified example of the auxiliary intake passage as in FIG.10.
FIG. 18 is an explanatory plan view of a modified example of the auxiliary intake passage as in FIG.10.

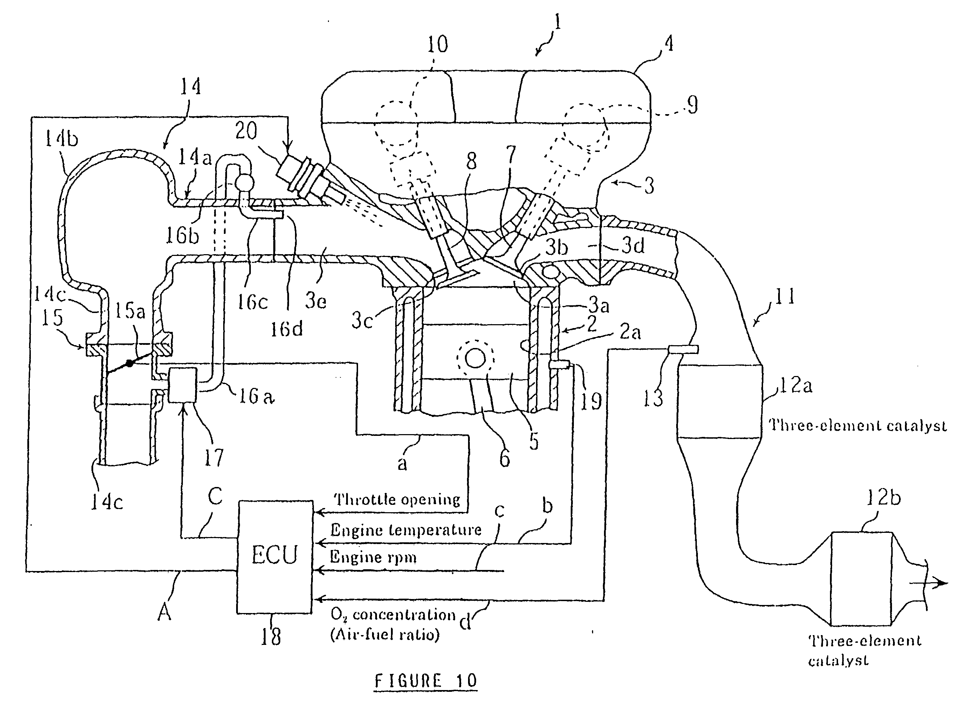

Here, the intake device as shown in the FIGs. 10-16 does not fall under the scope of the present invention and is kept in the description due to the improved comprehension thereof.

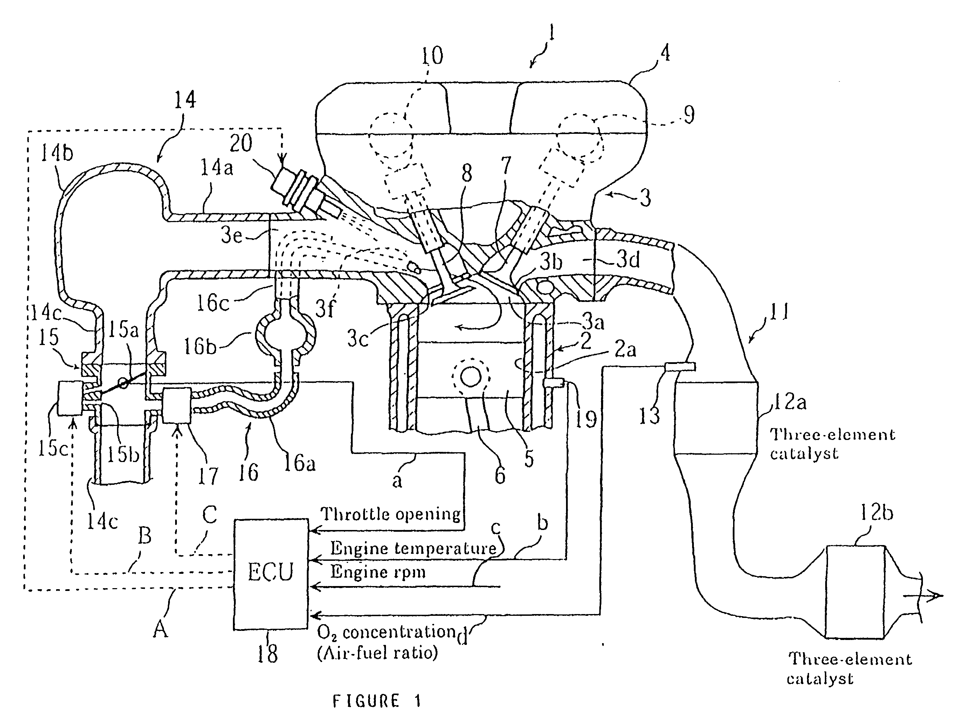

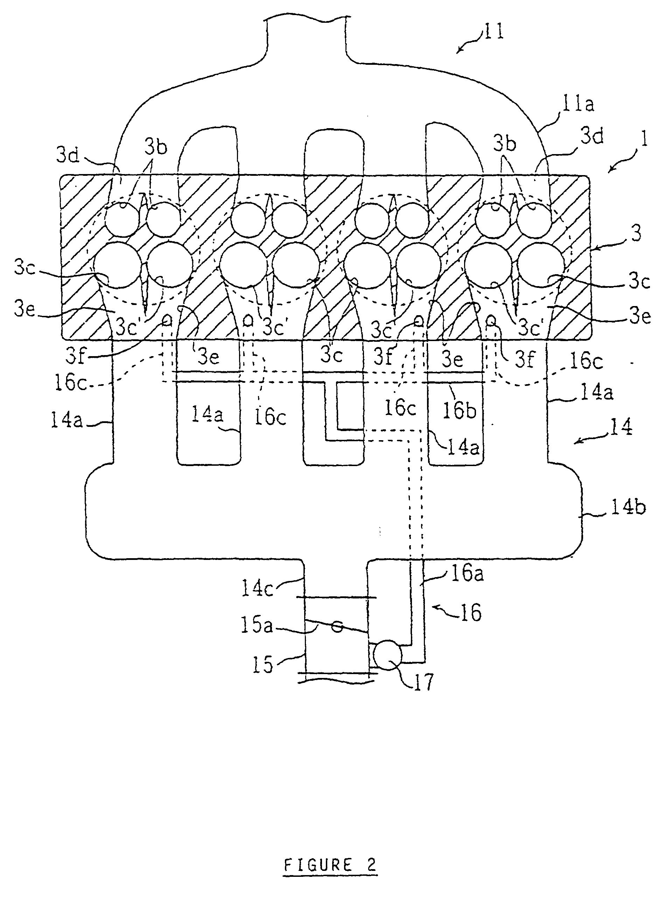

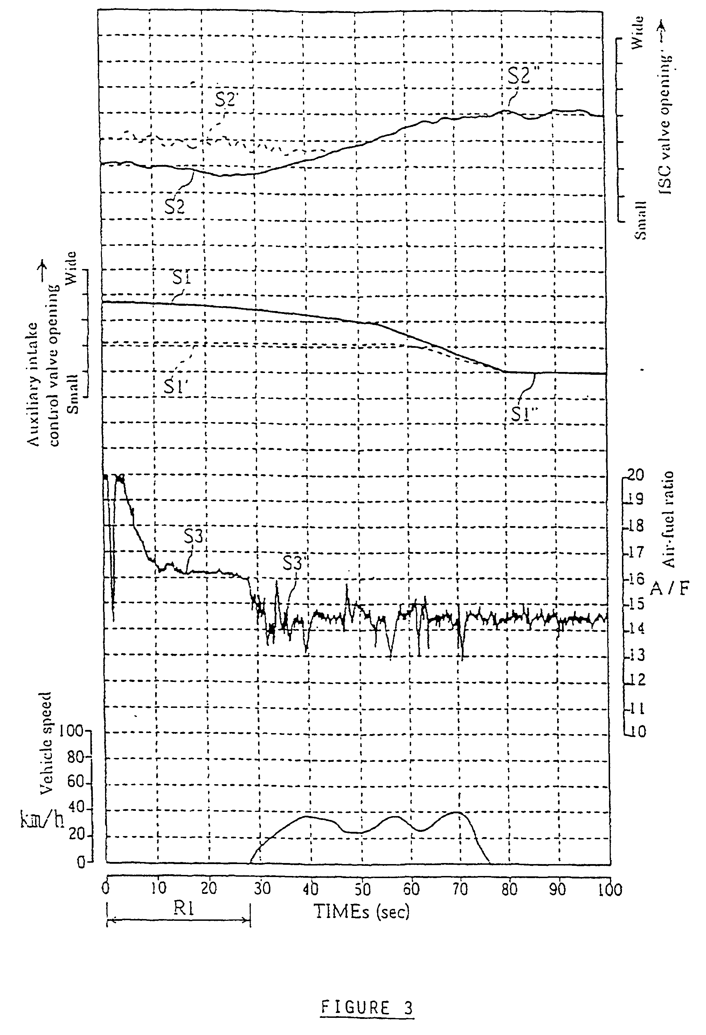

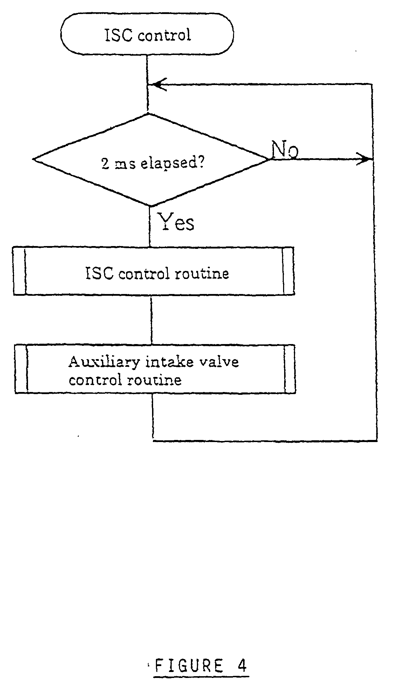

FIGs. 1 through 9 are for explaining the engine intake devices as embodiments of the invention related to some embodiments. Fig. 1 show an overall constitution of the device. FIG. 2 is an explanatory drawing of the auxiliary intake passage. FIG. 3 is a control characteristic chart of the opening degrees of various valves, and the change in the air-fuel ratio relative to the elapsed time. FIGs. 4 through 9 are flow charts for explaining the control operations.

In the drawings are shown, an automobile engine 1 of a water-cooled, 4-cycle, in-line, 4-cylinder, 4-valve type mounted on a vehicle with the crankshaft directed in the vehicle width direction. The general constitution of the engine 1 comprises a cylinder block 2 integrally formed with a crankcase (not shown) over which are stacked and bolted together a cylinder head 3 and a head cover 4. In each of cylinder bores 2a of the cylinder block 2 is inserted a piston 5 for free sliding and connected to the crankshaft through a connecting rod 6.

Each of the combustion chamber recesses 3a formed in the cylinder head 3 surface on the side mating with the cylinder block 2 is formed with two exhaust valve openings 3b and two intake valve openings 3c, to be respectively opened and closed with exhaust valves 7 and intake valves 8. The exhaust valves 7 and the intakes valves 8 are respectively driven for opening and closing with an exhaust camshaft 9 and an intake camshaft 10. The exhaust valve openings 3b are led out to the front wall of the cylinder block 2 through exhaust ports 3d. The outside connection ports of the exhaust ports 3d are connected to a manifold 11a of an exhaust system 11. A first and a second, three-element catalysts 12a and 12b are disposed on the downstream side of the confluent portion of the exhaust system 11. An O₂ sensor 13 is disposed on the upstream side of the first three-element catalyst 12a.

The intake valve openings 3c are led out to the rear wall of the cylinder block 2 through intake ports 3e, respectively. A fuel injection valve 20 for each cylinder is installed in the middle of each intake port 3e. Each injection valve 20 injects to supply fuel of the amount commensurate with the engine operation state, toward the intake valve opening 3c at specified time intervals.

The outside connection ports of the intake ports 3e are connected to an intake system 14. The intake system 14 has a general constitution in which intake manifold pipes 14a is connected on their one side to the outside connection ports where intake ports 3e for the intake valve openings 3c meet together and is connected on their other side to a surge tank 14b having a specified volume and extending in the camshaft direction, a throttle body 15 is interposed between a main pipe 14c on the upstream side of the surge tank 14b and an intake pipe 14d is connected to an air cleaner.

The throttle body 15 is provided with a throttle valve 15a of a butterfly type for variably controlling the intake flow rate and an idling speed controlling (ISC) valve 15c of a solenoid type for variably controlling the flow rate through a bypass passage 15b for bypassing the throttle valve 15a when the throttle valve 15a is at the minimum opening position.

The intake system 14 is also provided with an auxiliary intake passage 16 interconnecting an immediately adjacent upstream side part of the throttle valve 15a and an adjacent part of the intake valve opening 3c of one of the intake ports 3e. An upstream passage 16a of the auxiliary intake passage 16 connected to the inside of the immediately adjacent upstream side of the throttle valve 15a of the throttle body 15 is branched to four distribution passages 16c through a balancing pipe 16b extending in the camshaft direction. The downstream end opening of each of the distribution passages 16c is connected to a nozzle 3f opening in the middle of one of the intake ports 3e.

As described above, because of arrangement that the downstream end opening of the distribution passages 16c is spatially connected only to one intake valve opening 3c' and that the shape and opening position of the nozzle 3f are set so that the intake supplied through the auxiliary intake passage 16 is introduced into and directed to flow along the inside circumferential surface of the cylinder bore 2a, swirl (horizontal eddy) is produced and intake turbulence is produced in the cylinder bore 2a.

Here, an alternative arrangement for producing the intake turbulence in the cylinder bore 2a may be made. That is, the intake flow is deflected toward the ceiling wall of the intake port 3e and introduced, while being directed from part of the intake valve opening 3c near the cylinder bore center to the cylinder axis direction (vertical direction) into the cylinder bore 2a so that vertical eddy (tumble) is produced in the cylinder bore 2a.

An auxiliary intake control valve 17 is interposed in the upstream passage 16a of the auxiliary intake passage 16 to variably control the intake flow rate through the passage 16. The auxiliary intake control valve 17 is of a solenoid type to variably control the intake passage area or the auxiliary intake flow rate by duty control and is controlled with an ECU 18. The ECU 18 serves as a control valve controlling means for controlling the opening degrees of the auxiliary intake control valve 17 and the ISC valve 15c. The ECU 18 receives; opening signals (a) of the throttle valve 15a, engine temperature signals (b) from a water temperature sensor 19, engine speed signals (c) from a crank angle sensor for detecting the crankshaft speed, and air-fuel ratio signal (d) from the O₂ sensor 13, and according to the engine operation state outputs fuel injection controlling signal (A) to the fuel injection valve 20, ISC control signals (B) to the ISC valve 15c, and auxiliary intake control signal (C) to the auxiliary intake control valve 17.

Now functions and effects of the intake device in this form of embodiment will be described.

In this embodiment, the ECU 18 controls the opening degree of the ISC valve 15c and the auxiliary intake control valve 17 according to the engine operation state using such parameters as the engine temperature, throttle opening degree, and engine speed, and at the same time, map-controls the injection timing and injection intervals of the fuel injection valve 20 according to built-in control data map and tables, or feedback-controls so that the air-fuel ratio detected with the O₂ sensor 13 becomes the target value.

**Table 1**

| Operation range | Auxiliary intake control valve | ISC valve | Target air-fuel ratio |
|---|---|---|---|
| Cold (Cold start, warm-up) | Wide | Small (range) | 16 - 17 |
| Hot (1) (After warm-up, low speed, low load) | Narrow or closed | Normal | λ=1 |
| Hot (2) (After warm-up, high speed, low load) | Narrow or closed | Normal | λ=1 |

In the operation range where the intake turbulence is required to occur as a result of swirl produced, as the intake is introduced into the cylinder bore 2a, specifically in the cold operation range as during a cold start or warm-up operation where the engine temperature detected with a water temperature sensor 19 is at or below a specified value (generally in the range within about 30 seconds of the start of the engine 1, as shown with R1 in FIG. 3), the auxiliary intake control valve 17 is held to a wide opening degree as shown in the box of Cold in Table 1 (as shown with S1 in FIG, 3), and the ISC valve 15c is controlled to open or close within a small range (as shown with S2 in FIG, 3). Also, the fuel injection rate (period) out of the fuel injection valve 20 is controlled so that the air-fuel ratio becomes 16 - 17 (as shown with S3 in FIG- 3).

With the above-described arrangement, the intake flow rate becomes greater through the auxiliary intake passage 16 than through the idling passage 15b, and a relatively large amount of intake is introduced through the auxiliary intake passage 16 and one of the intake valve openings 3c' into the cylinder bore 2a. Because the distribution passage 16c is connected to only one of the intake valve openings 3c' and the shape and location of the nozzle 3f are set so that the intake is directed to flow along the inside circumference of the cylinder bore 2a, swirl (intake horizontal eddy) is produced in the cylinder bore 2a, combustion is stabilized in spite of a lean state with the air-fuel ratio of 16 - 17, and HC and CO in the exhaust are reduced.

On the other hand, in the operation range where no intake turbulence is preferable, specifically as shown in the box of Hot (1) in Table 1, at the time of low speed and low load as during idling of the hot operation range with the engine temperature detected with the water temperature sensor 19 being at or higher than a specified, value, the auxiliary intake controlling valve 17 is held to a small opening degree or closed (as shown with S1' in FIG. 3) and the ISC valve 15c is ordinarily controlled to an opening degree determined from the throttle opening degree and engine speed and corrected with the cooling water temperature (as shown with S2' in FIG. 3). The fuel injection valve 20 is controlled so that the air-fuel ratio becomes the theoretical value of λ =1 (as shown with S3' in FIG. 3).

With the arrangement described above, the amount of intake introduced through the auxiliary intake passage 16 into the cylinder bore is reduced and occurrence of the intake turbulence is suppressed. As a result, fuel does not adhere to the cylinder inside wall even in the case the amount of fuel, with the air-fuel ratio at the theoretical λ=1, is greater than in the cold operation range, and deterioration in the exhaust gas property is avoided. Here, the opening degree of the throttle valve 15a is kept at a minimum or slightly wider than the minimum.

In the rest of the hot operation range described above, as shown in the box of Hot (2) in Table 1, the auxiliary intake controlling valve 17 is held to a small opening degree or closed (as shown with S1" in FIG. 3) and the ISC valve 15c is ordinarily controlled to an opening degree determined from the throttle opening degree and engine speed and corrected with the cooling water temperature (as shown with S2" in FIG. 3). In this operation range, the intake flows through the throttle valve 15a and the air-fuel ratio is controlled with a theoretical value as the target.

Next, control operations for the ISC valve 15c and the auxiliary intake control valve 17 by means of the ECU 18 will be described more in detail in reference to the flow charts shown in FIGs. 4 through 8.

With the control operation with the ECU 18, as shown in FIG. 4, an ISC control routine and an auxiliary intake valve control routine are performed every 2 milliseconds (msec) for example.

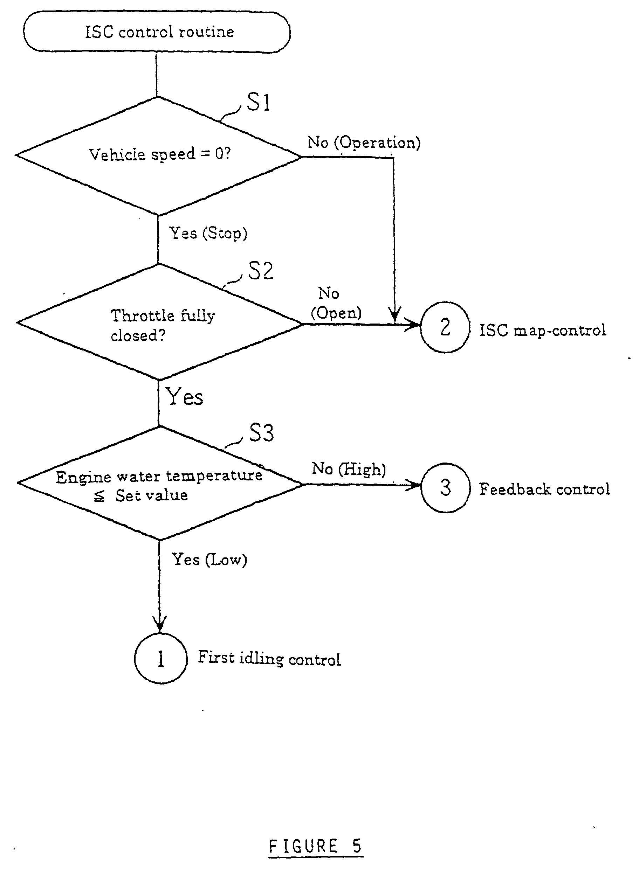

First, in the ISC controlling routine, as shown in FIG. 5, in the case the vehicle is at rest, the throttle 15a is fully closed, and the engine water temperature is at or below a specified value, a first idling control is performed (steps S1 through S3).

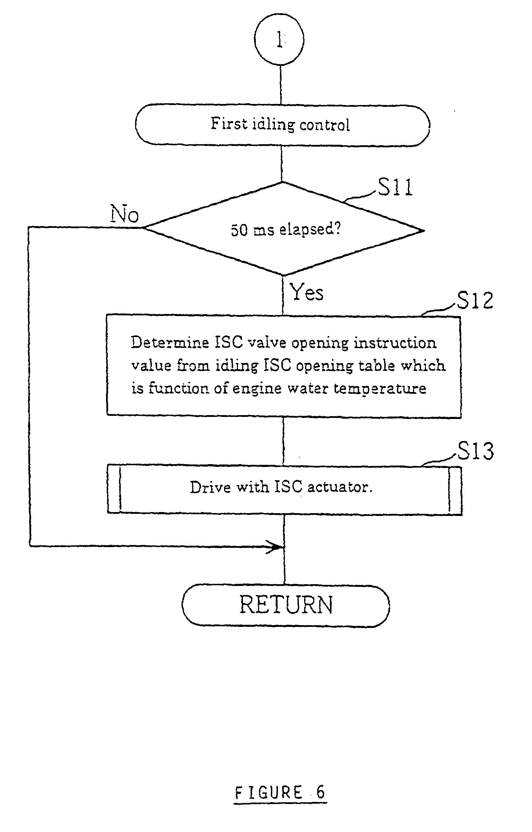

In the first idling control, as shown in FIG. 6, an opening degree instruction value is determined at 50 msec intervals corresponding to a current engine water temperature using an ISC opening degree table set as a function of the engine water temperature, and the actuator of the ISC valve 15c drives the valve member so that the opening degree of the ISC valve 15c becomes the opening degree instruction value (steps S11 through S13).

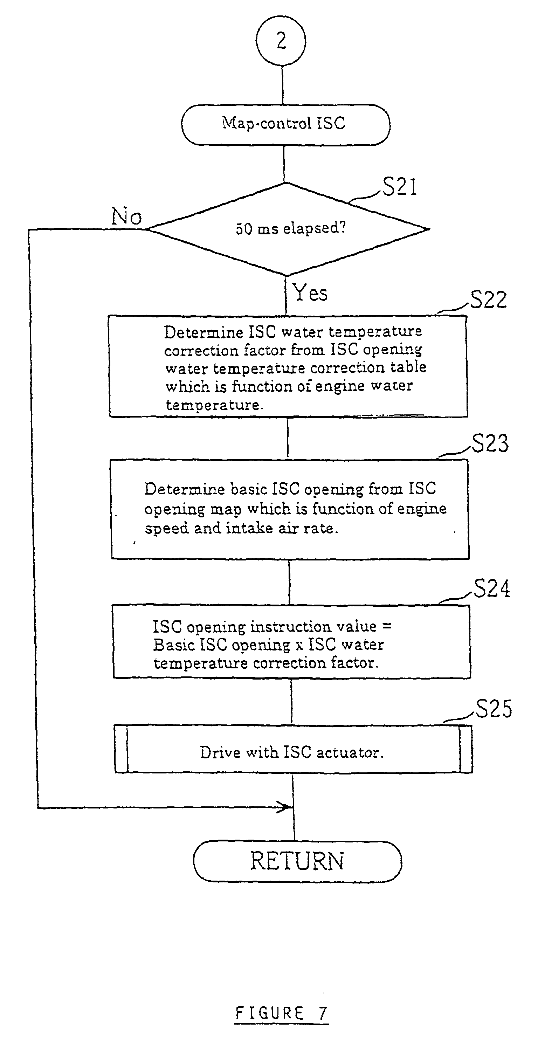

In the case the vehicle is determined not to be at rest in the step S1, and in the case the throttle valve 15a is determined not to be fully closed in the step S2, the ISC valve 15c is map-controlled. In this map-control of the ISC, as shown in FIG. 7, an ISC water temperature correction factor is determined at 50 msec intervals from an ISC opening degree water temperature correction table set as a function of the engine water temperature (steps S21, S22), a basic ISC opening degree is determined from an ISC opening degree map set as a function of the engine speed and the throttle opening degree (intake air flow rate) (step S23), an ISC opening degree instruction value is determined by calculating the product of the basic ISC opening degree and the ISC water temperature correction factor (step S24), and the actuator of the ISC valve 15c drives the valve member so that the opening degree of the ISC valve 15c becomes the opening degree instruction value (step S25).

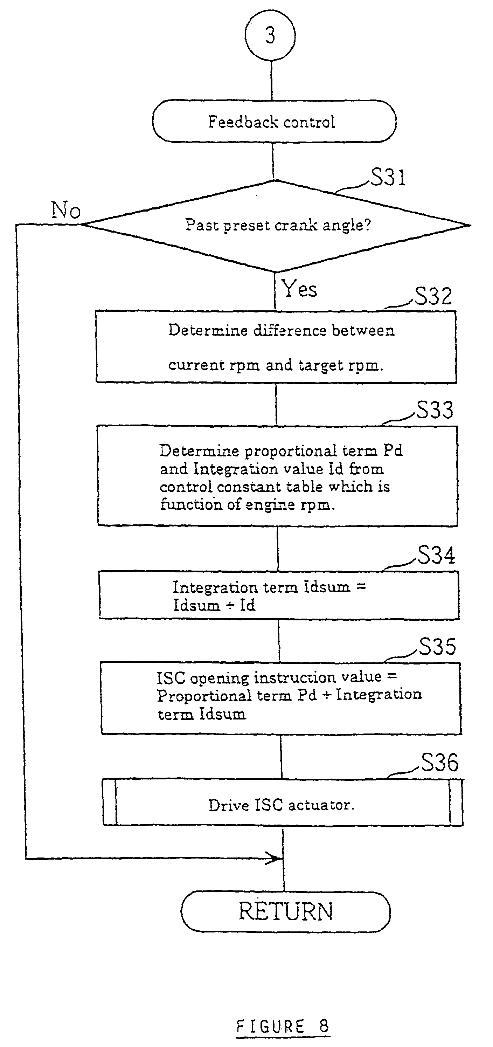

In the above-described steps S1 through S3, in the case a determination is made that the vehicle is at rest, the throttle valve 15a is fully closed, and the engine water temperature is higher than a preset value, the ISC valve 15c is feedback-controlled. In this ISC feedback control, as shown in FIG. 8, a difference between a current engine speed and a target engine speed is determined at predetermined crank rotation angle intervals (steps S31, S32), and a proportional term Pd and an integration value Id are determined from a control constant table set as a function of the differential engine speed (step S33). An ISC opening degree instruction value is determined by adding an integration term Idsum, determined by adding the integration value to the integration term, to the proportional term Pd (step S34), and the actuator of the ISC valve 15c drives the valve member so that the opening degree of the ISC valve 15c becomes the opening degree instruction value (step S35),

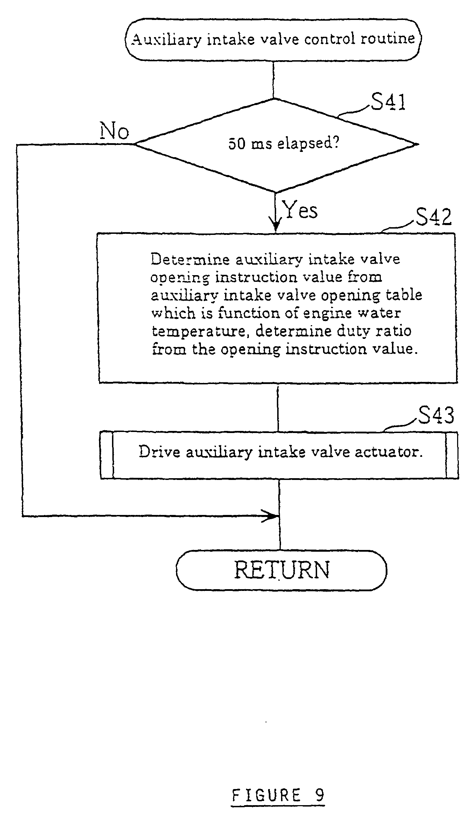

In the auxiliary intake valve control routine as shown in FIG. 9, an auxiliary intake valve opening degree instruction value commensurate with the engine water temperature is determined at every lapse of 50 msec from an auxiliary intake valve opening degree table set as a function of the engine water temperature, and further a duty ratio commensurate with the opening degree instruction value is determined (steps S41, S42), and the actuator of the auxiliary intake control valve 17 drives the valve member to open and close with the duty ratio (step S42).

With this embodiment as described above, in the cold operation range where the intake turbulence is required, the intake flow rate through the auxiliary intake passage 16 is increased and the intake flow is directed and introduced into the cylinder bore 2a so as to produce horizontal eddy or vertical eddy. As a result, swirl is produced in the cylinder bore, combustion is stabilized in spite of a lean setting with the air fuel ratio of 16 -17, and the exhaust gas property is improved with less amount of HC and CO produced.

Also with this embodiment, in the operation range where the intake turbulence is not required, since the intake flow rate through the auxiliary intake passage 16 is decreased and the control range for the intake flow through the idling passage 15b is increased, idling speed can be easily adjusted and stabilized. Since no turbulence is produced, the problem of fuel adhering to the cylinder inside wall is avoided even with the air-fuel ratio approximately at the theoretical value, and deterioration in the exhaust gas property is avoided.

While the auxiliary intake control valve 17 used in the first embodiment described above is of a type capable of continuously, variably controlling the intake flow rate, the auxiliary intake control valve associated with this invention may be of an on-and-off control type that can permit or atop the intake flow through the auxiliary intake passage 16. In the case such an on-and-off control valve is used, it may be constituted to produce the intake turbulence in the cold operation range by turning on the valve, and to prevent the intake turbulence from occurring in the above-described operation ranges of Hot (1) and Hot (2) by turning off the valve.

Here, while the above-described embodiment uses both of the ISC valve 15c for controlling the flow rate through the idling passage 15b and the auxiliary intake control, valve 17 for controlling the flow rate through the auxiliary intake passage 16, it may also be arranged that the auxiliary intake control valve 17 also serves as the ISC valve 15c.

FIGs. 10 through 16 show an intake device not falling under the scope of the present invention.

The same symbols in FIGs. 10 through 16 as those in FIGs. 1 through 9 denote the same or corresponding parts. In this device, the idling passage 15b and the ISC valve 15c used in the first embodiment are left out. The upstream end of the upstream passage 16a of the auxiliary intake passage 16 is connected to the inside of the throttle body 15 at a position immediately upstream of the throttle valve 15a while its downstream end is branched through the balancing pipe 16b extending in the camshaft direction into four distribution passages 16c, with each of the distribution passages 16c being inserted to the inside at a position displaced toward one of the intake ports 3e'. Furthermore, each distribution passage 16c is bent to the downstream direction so as to extend along the inside ceiling surface of one of the intake ports 3e'. The downstream end opening 16d of each distribution passage 16c is located on the upstream side of the spout of the fuel injection valve 20 and apart from the spout to the extent that air discharged from the opening 16d does not directly strike the fuel injected from the fuel injection valve 20.

In the auxiliary intake passage 16 is interposed an intake control valve 17' serving as both of the ISC valve 15c and the auxiliary intake control valve 17 used in the first embodiment. The intake control valve 17' is controlled with the ECU 18 in the manner shown in Table 2.

**Table 2**

| Operation range | Intake control valve | Target air-fuel ratio |
|---|---|---|
| Cold (Cold start, warm-up) | Wide | 16 - 17 |
| Hot (1) (After warm-up, low speed, low load) | Normal | λ=1 |
| Hot (2) (After warm-up, high speed, high load) | Normal | λ=1 |

In the cold operation range as during- a cold start or warm-up operation, as shown in the box of Cold in Table 2, the intake control valve 17' is held to a wide opening degree and fuel injection rate (period) from the fuel injection valve 20 is controlled so that the air-fuel ratio becomes 16 - 17.

As a result, the intake flow rate through the auxiliary intake passage 16 is increased and a relatively large amount of intake is supplied through the auxiliary intake passage 16 to one of the intake ports 3e'. As will be described later, since the pressure of the intake supplied through the auxiliary intake passage 16 fluctuates due to intake pulsation, turbulence is produced in the intake port 3e', so that air and fuel mix well together, atomization is promoted, and combustion state is improved.

In the low speed, low load operation range after the warm-up operation, and in the high speed, high load operation range, the intake control valve 17' is normally controlled as shown in the boxes of Hot (1) and (2) in Table 2 to the opening degree determined from the engine speed and corrected with the engine water temperature. The fuel injection valve 20 is controlled so that the air-fuel ratio becomes the theoretical value of λ=1.

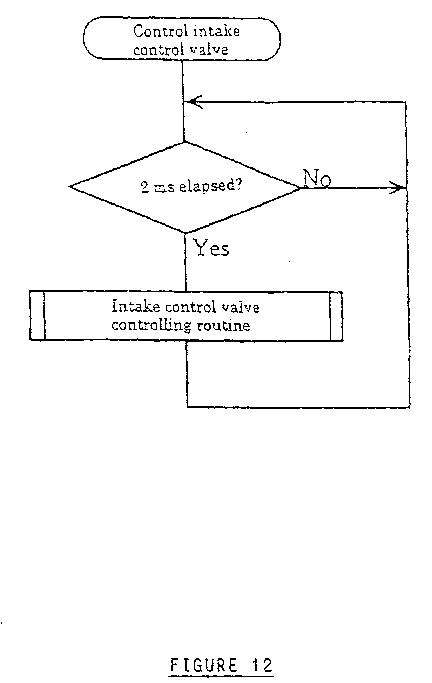

The operation of controlling the intake control valve 17' with the ECU 18 will be described in reference to flow charts of FIGs. 12 through 16.

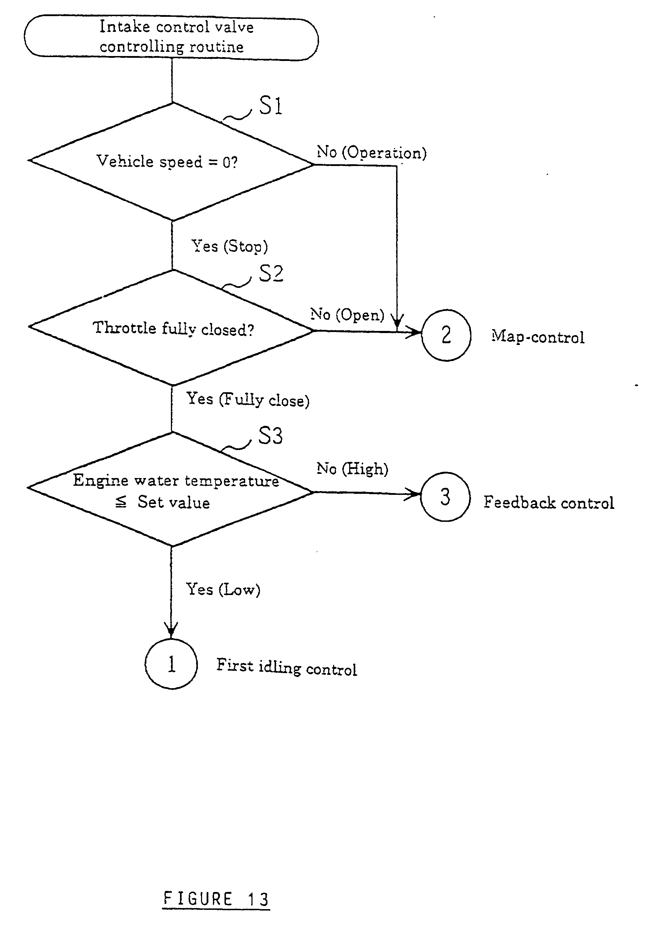

As for the operation of controlling the intake control valve 17', first as shown in FIG. 12, an intake control valve controlling routine is repeated for example at 2 msec intervals. In the intake control valve controlling routine, as shown in FIG. 13, in the case the vehicle is at rest, the throttle valve is fully closed, and the engine water temperature is at or below a preset value, a first idling control is performed (steps S1 through S3). In the case the vehicle is not at rest or the throttle is not fully closed, a map-control is performed. In the case the vehicle is at rest, the throttle is fully closed, and the engine water temperature is at or above the preset value, a feedback control is performed.

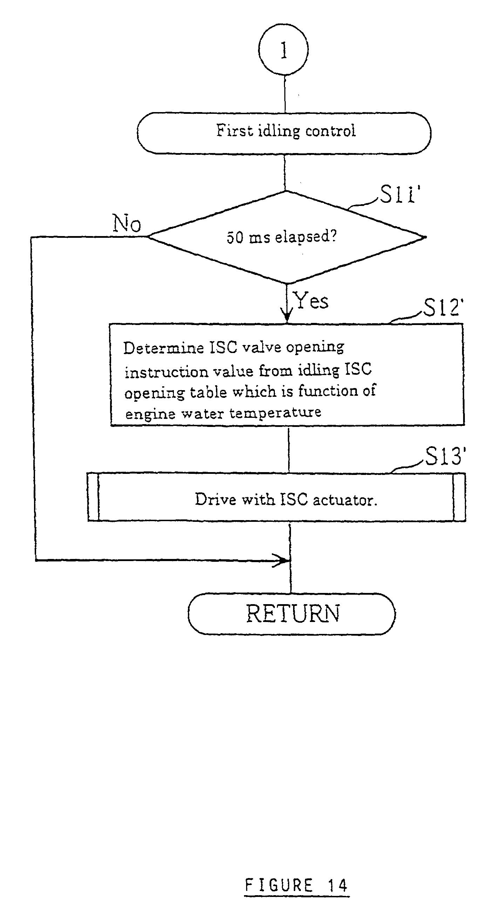

In the above-described first idling control as shown in FIG. 14, an intake control valve opening degree instruction value commensurate with the current engine water temperature is determined at 50 msec intervals from an intake control valve opening degree table set as a function of the engine water temperature, and the actuator of the intake control valve 17' drives the valve member so that the opening degree of the intake control valve 17' becomes the opening degree instruction value (steps S11' through S13').

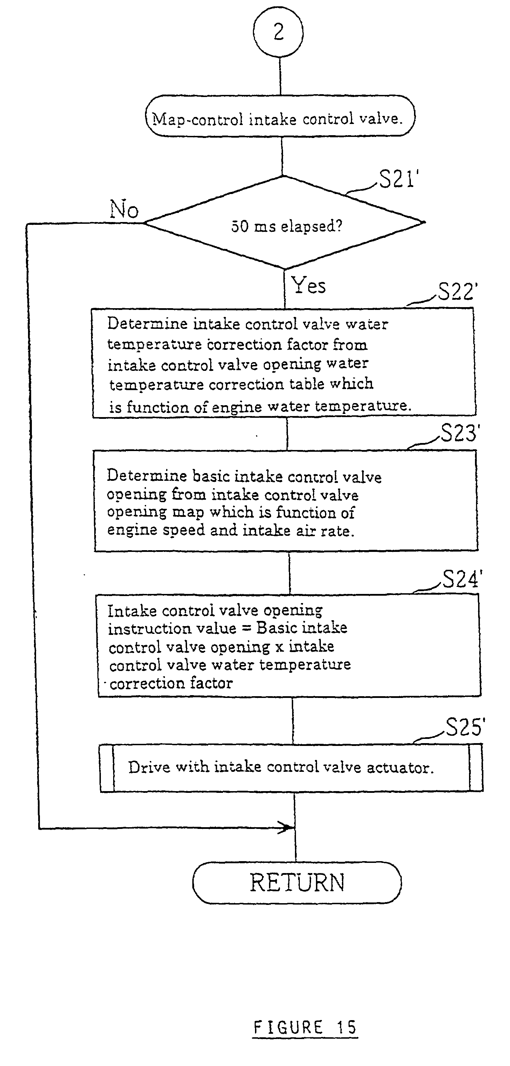

In the map-control of the above-described intake control valve as shown in FIG. 15, an intake control valve water temperature correction factor is determined at 50 msec intervals from an intake control valve opening degree water temperature correction table set as a function of the engine water temperature (steps S21', S22'), a basic intake control valve opening degree is determined from an intake control valve opening degree map set as a function of engine speed and throttle opening degree (intake air rate) (step S23'), an intake control valve opening instruction value is determined by summing up the basic intake control valve opening degree and the intake control valve water temperature correction factor (step S24'), and the actuator of the intake control valve 17' drives the valve member so that the opening degree of the intake control valve 17' becomes the opening degree instruction value (steps S25').

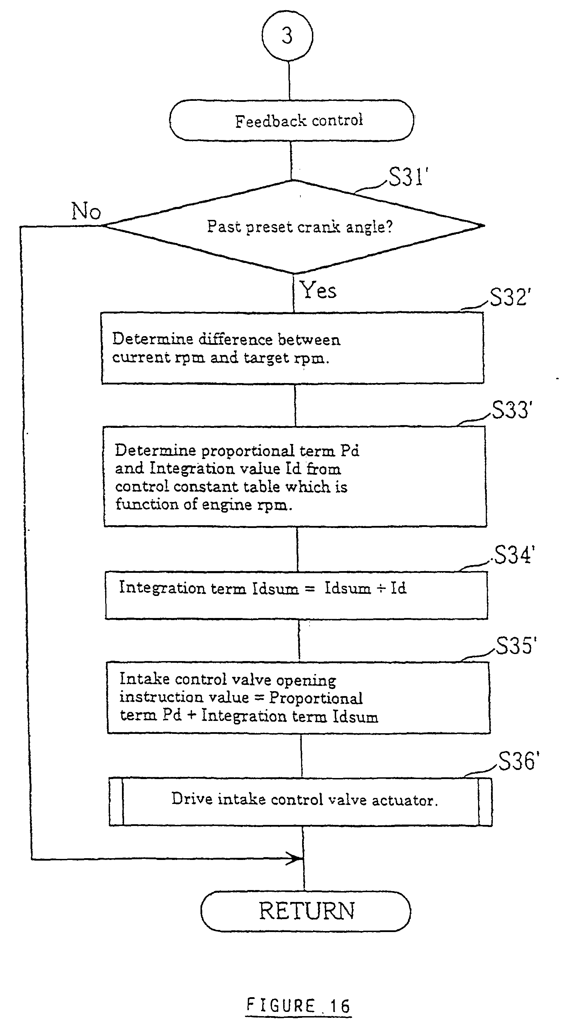

In the above-described feedback control as shown in FIG. 16, a difference between a current engine speed and a target engine speed is determined at predetermined crank rotation angle intervals (steps S31', S32'), and a proportional term Pd and an integration value Id are determined from a control constant table set as a function of the differential engine speed (step S33'). An intake control valve opening degree instruction value is determined by adding an integration term Idsum, determined by adding the integrated value to the integration term, to the proportional term Pd (steps S34', S35'), and the actuator of the intake control valve 17' drives the valve member so that the opening degree of the intake control valve 17' becomes the opening degree instruction value (step S36').

In this way, since the downstream end opening of the distribution passage 16c of the auxiliary intake passage 16 is disposed on the upstream side of the spout of the fuel injection valve 20 so that the intake from the opening flows along the ceiling wall surface of the intake port 3e', turbulence is produced in the intake port 3e', the intake still containing the turbulence is introduced into the combustion chamber in the suction stroke, and fuel is injected to the intake in which the turbulence in the intake port 3e' is being produced, so that mixing and evaporation of air and fuel are accelerated, combustion is improved as in the first embodiment in which turbulence is produced in the combustion chamber, the exhaust gas property in the cold operation range is improved, the idling speed after a warm-up operation is stabilized, and the problem of deterioration in the exhaust gas property is avoided.

Since the opening degree of the intake control valve 17' is controlled so that the intake flow rate through the auxiliary intake passage 16 is greater during a cold start and warm-up operation than after the end of warm-up operation and that the air-fuel ratio is greater than the theoretical value, it is possible to produce turbulence in the intake port 3e, to stabilize combustion while setting the air-fuel ratio to a lean value, to reduce the amounts of HC and CO in the cold operation range, and to improve the exhaust gas property.

In the idling operation range after the end of the warm-up operation, since the opening degree of the intake control valve 17' is controlled so that the intake flow rate through the auxiliary intake passage 16 becomes appropriate for maintaining a specified idling speed and that the air-fuel ratio becomes approximately the theoretical value, intake turbulence is produced in the intake port 3e, combustion is stabilized, and the idling speed is stabilized.

How the mixture of fuel and air, and atomization (evaporation) of fuel are improved by supplying the intake through the auxiliary intake passage 16 to the intake port 3e' will be described more in detail.

Generally, the differential pressure between the intake air vacuum and the atmospheric pressure varies due to intake pulsation. In this device, the upstream end of the auxiliary intake passage 16 is connected to the atmospheric pressure area on the upstream side of the throttle valve 15a. Therefore, it can be considered that the pressure of the intake flowing through the auxiliary intake passage 16 into the intake port 3e varies with the intake pulsation. And because the balancing pipe 16b is in spatial connection with other cylinders, the pressure is also considered to be affected with variations in the intake vacuum in other cylinders. Therefore, considerable amount of turbulence is considered to be occurring in the air flowing from the downstream end opening 16d of the distribution passage 16c of the auxiliary intake passage 16 into the intake port 3e'. As a result, it can be considered that turbulence is also occurring in the intake flowing through the nozzle area of the fuel injection valve 20 located in the intake port 3e'.

In particular, as for the fuel injection timing in the cold operation range shown in Table 1, the injection of fuel is almost over in the vicinity of 100 degrees before the top dead center (in the exhaust stroke). That is to say, fuel is injected to the intake in which the turbulence is being produced so that the injected fuel is subjected to air turbulence before the intake valve is opened to introduce the intake into the cylinder. This improves the mixing of fuel with air and accelerates evaporation of fuel. As a result, combustion state is improved and in particular the exhaust gas property is improved even in the case tumble or swirl is not produced as in the first embodiment.

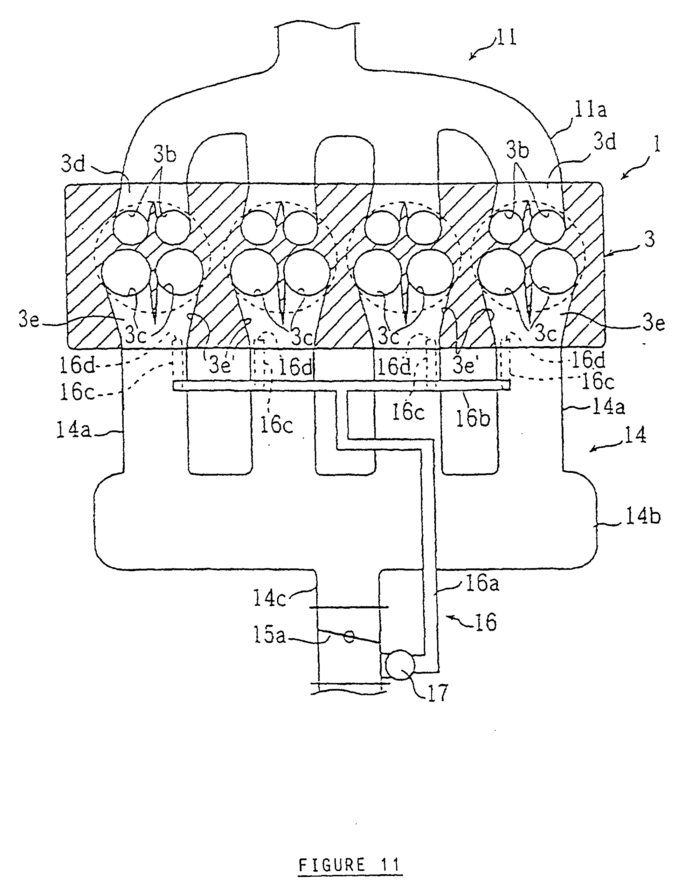

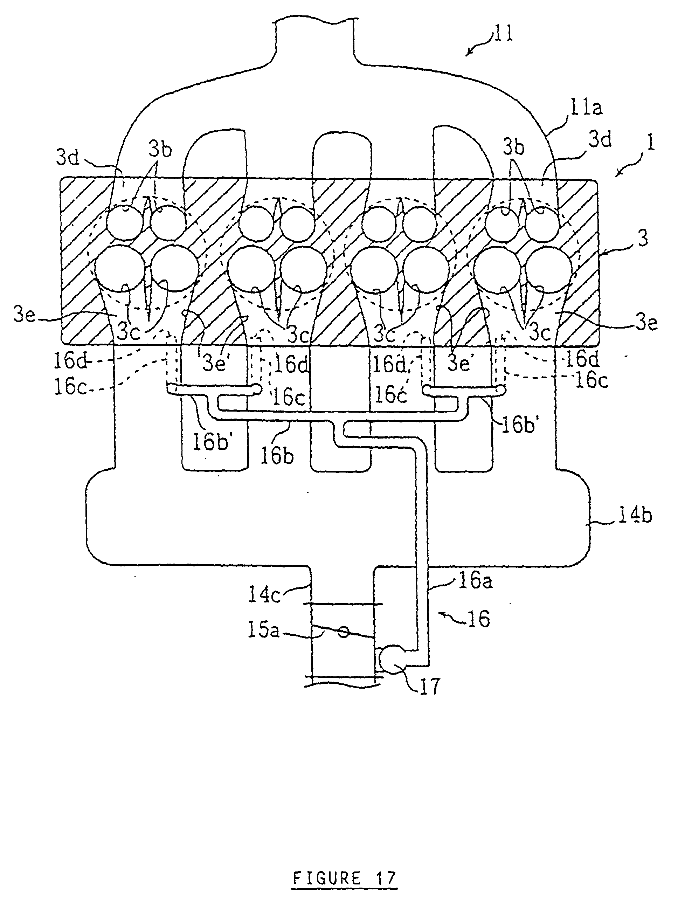

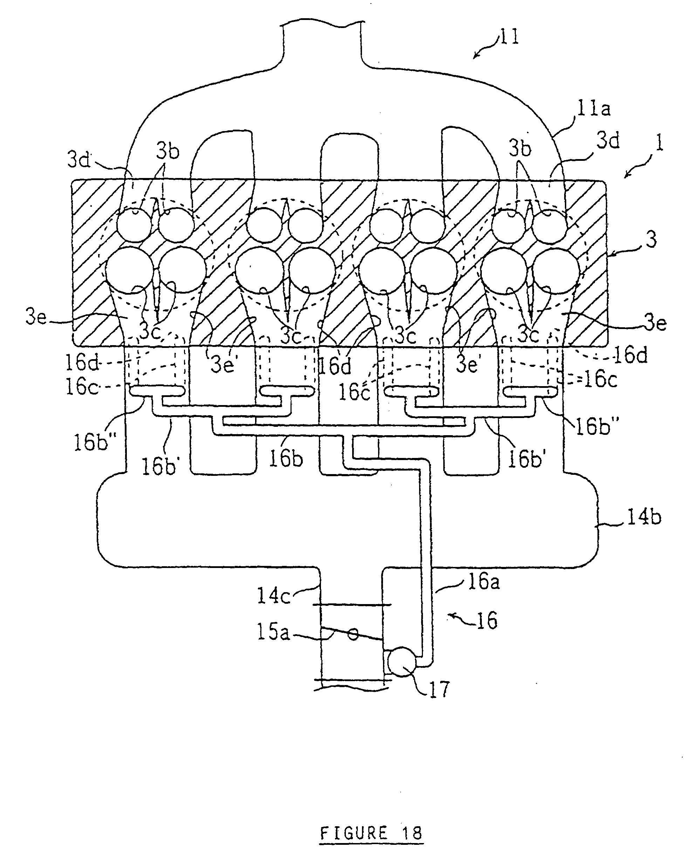

As for the constitution of the auxiliary intake passage 16, various modifications as shown in FIGs. 17 and 18 for example may be employed. In those figures, the same symbols as those in FIG. 11 denote the same or equivalent parts.

FIG. 17 shows an example in which each of both ends of the balancing pipe 16b has a sub-balancing pipe 16b', with each of its both ends being connected to a distribution passage 16c. FIG. 18 shows another example in which each of both ends of the balancing pipe 16b has the sub-balancing pipe 16b', with each of its both ends having a sub-sub-balancing pipe 16b", and with each of its both ends being connected to the distribution passage 16c. In this example, each of both of the intake ports 3e and 3e' is provided with the distribution passage 16c.

In the modified examples shown in FIGs. 17 and 18, since the balancing pipes are provided in a plural number of stages, the intake flow supplied to each cylinder is less affected with other cylinders, and the intake flow rate is controlled with good accuracy.

## Claims

1. Internal combustion engine (1) comprising an intake device (14), a fuel injection valve (20) for injecting fuel into an intake passage or a combustion chamber (3a), a throttle valve (15a) disposed on an upstream side of the fuel injection valve (20) to variably control an intake flow rate through the intake passage, and an auxiliary intake passage (16) for leading the intake flow rate to a part of the intake passage on the upstream side of an intake valve (8) opening by interconnecting a part of the intake passage on the upstream side of the throttle valve (15a) and a part of the intake passage on the upstream side of the intake valve opening to produce intake turbulence in the cylinder bore,
**characterized in that** the intake device (14) further comprises an idling passage (15b) for bypassing the throttle valve (15a) when the throttle valve (15a) is in an idling position and an idling speed control valve (15c) for variably controlling the intake flow rate through the idling passage (15b).

2. Internal combustion engine (1) according to claim 1, **characterized by** an auxiliary intake control valve (17) for variably controlling the intake flow rate through the auxiliary intake passage (16).

3. Internal combustion engine (1) according to claim 2, **characterized by** a control valve controlling means (18) for controlling the opening degree of the auxiliary intake control valve (17) to an opening degree commensurate with the engine operation state.

4. Internal combustion engine (1) according to at least one of the preceding claims 1 to 3, **characterized in that** the fuel injection valve (20) is disposed to inject fuel toward the intake valve opening (3c), and that the downstream end opening of the auxiliary intake passage (16) is disposed at the part of the intake passage in the vicinity of the intake valve opening (3c) to load the intake with a directionality to the combustion chamber (3a) so that turbulence is produced in the combustion chamber (3a).

5. Internal combustion engine (1) according to claim 4, **characterized in that** the control valve controlling means (18) controls the opening degree of the idling speed control valve (15c) and the auxiliary intake control valve (17) commensurate with the operation state of the engine (1).

6. Internal combustion engine (1) according to claim 5, **characterized in that** the control valve controlling means (18) controls the opening degree of the auxiliary intake control valve (17) and the idling speed control valve (15c) so that the intake flow rate is greater through the auxiliary intake passage (16) than through the idling passage (15b) and the air-fuel ratio is leaner than a stoichiometric air/fuel ratio in the operation range where occurrence of turbulence in the combustion chamber (3a) is required as during a cold start and warm-up operation.

7. Internal combustion engine (1) according to at least one of the preceding claims 1 to 6, **characterized in that** the fuel injection valve (20) is disposed to inject fuel toward the intake valve opening (3c) and the downstream end opening of the auxiliary intake passage (16) is disposed on the upstream side of the spout of the fuel injection valve (20) so that the intake from the opening flows along the auxiliary intake passage wall surface.

8. Internal combustion engine (1) according to claim 7, **characterized in that** the control valve controlling means (18) controls the opening of the auxiliary intake control valve (17) so that the intake flow rate through the auxiliary intake passage (16) is greater during the cold start and warm-up operation than after the end of the warm-up operation and that the air-fuel ratio is greater than the stoichiometric air/fuel ratio.

9. Internal combustion engine (1) according to claim 7 or 8, **characterized in that** the control valve controlling means (18) controls the opening degree of the auxiliary intake (16) control valve (17) so that the intake flow rate through the auxiliary intake passage (16) is appropriate for maintaining a specified idling speed and that the air-fuel ratio is approximately equal to the stoichiometric air/fuel ratio.

## Patentansprüche

1. Brennkraftmaschine (1) mit einer Einlassvorrichtung (14), einem Kraftstoffeinspritzventil (20), um den Kraftstoff in einen Einlasskanal oder eine Brennkammer (3a) einzuspritzen, einem Drosselventil (15a), angeordnet auf einer stromaufwärtigen Seite des Kraftstoffeinspritzventils (20), um eine Einlassströmungsrate durch den Einlasskanal veränderbar zu steuern, und einem Hilfs- Einlasskanal (16), um die Einlassströmungsrate zu einem Teil des Einlasskanales auf der stromaufwärtigen eines Einlassventiles (8) zu führen, der sich durch Verbinden eines Teiles des Einlasskanales auf der stromaufwärtigen Seite des Drosselventiles (15a), und eines Teiles des Einlasskanales auf der stromaufwärtigen Seite der Einlassventilöffnung öffnet, um eine Einlassturbulenz in der Zylinderbohrung zu erzeugen, **dadurch gekennzeichnet, dass** die Einlassvorrichtung (14) außerdem aufweist einen Leerlaufkanal (15b), um das Drosselventil (15a) zu umgehen, wenn das Drosselventil (15a) in einer Leerlaufposition ist, und ein Leerlaufdrehzahl- Steuerventil (15c), um die Einlassströmungsrate durch den Leerlaufkanal (15b) veränderbar zu steuern.

2. Brennkraftmaschine (1) nach Anspruch 1, **gekennzeichnet durch** ein Hilfs-Einlasssteuerventil (17) zum veränderbaren Steuern der Einlassströmungsrate **durch** den Hilfs- Einlasskanal (16).

3. Brennkraftmaschine (1) nach Anspruch 2, **gekennzeichnet durch** eine Steuerventil- Steuereinrichtung (18) zum Steuern des Öffnungsgrades des Hilfs-Einlasssteuerventiles (17) auf einen Öffnungsgrad entsprechend des Motorbetriebszustandes.

4. Brennkraftmaschine (1) nach zumindest einem der vorhergehenden Ansprüche 1 bis 3, **dadurch gekennzeichnet, dass** das Kraftstoffeinspritzventil (20) angeordnet ist, um den Kraftstoff in die Richtung der Einlassventilöffnung (3c) einzuspritzen, und die stromabwärtige Endöffnung des Hilfs- Einlasskanales an dem Teil des Einlasskanales in der Nähe der Einlassventilöffnung (3c) angeordnet ist (16), um den Einlass mit einem Richtvermögen zu der Brennkammer (3a) zu beladen, so dass in der Brennkammer (3a) eine Turbulenz erzeugt wird.

5. Brennkraftmaschine (1) nach Anspruch 4, **dadurch gekennzeichnet, dass** die Steuerventil- Steuereinrichtung (18) den Öffnungsgrad des Leerlaufdrehzahl-Steuerventiles (15c) und das Hilfs-Einlasssteuerventil (17) entsprechend des Betriebszustandes des Motors (1) steuert.

6. Brennkraftmaschine (1) nach Anspruch 5, **dadurch gekennzeichnet, dass** die Steuerventil- Steuereinrichtung (18) den Öffnungsgrad des Hilfs-Einlasssteuerventiles (17) und des Leerlaufdrehzahl- Steuerventiles (15c) steuert, so dass die Einlassströmungsrate durch die Hilfs- Einlasskanal (16) größer wird als durch den Leerlauflaufkanal (15b) und das Luft- Kraftstoff- Verhältnis magerer als ein stöchiometrisches Luft- / Kraftstoff- Verhältnis in dem Betriebsbereich ist, wo das Auftreten von Turbulenzen in der Brennkammer (3a) erforderlich ist, wie während eines Kaltstarts und eines Aufwärmbetriebes.

7. Brennkraftmaschine (1) nach zumindest einem der vorhergehenden Ansprüche 1 bis 6, **dadurch gekennzeichnet, dass** das Kraftstoffeinspritzventil (20) angeordnet ist, um den Kraftstoff in die Richtung zu der Einlassventilöffnung (3c) einzuspritzen und die stromabwärtige Endöffnung des Hilfs- Einlasskanales (16) auf der stromaufwärtigen Seite des Austritts des Kraftstoffeinspritzventiles (20) angeordnet ist, so dass der Einlass von der Öffnung entlang der Hilfs- Einlasskanal-Wandoberfläche fließt.

8. Brennkraftmaschine (1) nach Anspruch 7, **dadurch gekennzeichnet, dass** die Steuerventil- Steuereinrichtung (18) die Öffnung des Hilfs-Einlasssteuerventiles (17) steuert, so dass die Einlassströmungsrate durch den Hilfs- Einlasskanal (16) während des Kaltstarts und des Aufwärmbetriebs größer als nach dem Ende des Aufwärmbetriebes ist, und dass das Luft- Kraftstoff- Verhältnis größer als das stöchiometrisches Luft- / Kraftstoff- Verhältnis ist.

9. Brennkraftmaschine (1) nach Anspruch 7 oder 8, **dadurch gekennzeichnet, dass** die Steuerventil- Steuereinrichtung (18) den Öffnungsgrad des Hilfs- Einlass- (16) Steuerventiles (17) steuert, so dass die Einlassströmungsrate durch den Hilfs- Einlasskanal (16) angemessen ist, um eine bestimmte Leerlaufdrehzahl beizubehalten, und dass das Luft- Kraftstoff- Verhältnis ungefähr gleich zu dem stöchiometrischen Luft- / Kraftstoff- Verhältnis ist.

## Revendications

1. Moteur à combustion interne (1), comprenant un dispositif d'admission (14), une vanne d'injection de carburant (20) pour injecter du carburant dans un passage d'admission ou une chambre de combustion (3a), une vanne papillon (15a) disposée sur un côté en amont de la vanne d'injection de carburant (20) pour commander, en pouvant le faire varier, un débit d'admission à travers le passage d'admission, et un passage d'admission auxiliaire (16) pour conduire le débit d'admission à une partie du passage d'admission sur le côté en amont d'une ouverture d'une soupape d'admission (8) en interconnectant une partie du passage d'admission sur le côté en amont de la vanne papillon (15a) et une partie du passage d'admission sur le côté en amont de l'ouverture de la soupape d'admission afin de produire une turbulence d'admission dans l'alésage de cylindre,
**caractérisé en ce que** le dispositif d'admission (14) comprend, en outre, un passage de ralenti (15b) pour contourner la vanne papillon (15a) lorsque la vanne papillon (15a) se trouve dans une position de ralenti, et une vanne de commande de vitesse de ralenti (15c) pour commander, en pouvant le faire varier, le débit d'admission à travers le passage de ralenti (15b).

2. Moteur à combustion interne (1) selon la revendication 1, **caractérisé par** une vanne de commande d'admission auxiliaire (17) pour commander, en pouvant le faire varier, le débit d'admission à travers le passage d'admission auxiliaire (16).

3. Moteur à combustion interne (1) selon la revendication 2, **caractérisé par** un moyen de commande de vanne de commande (18) pour commander le degré d'ouverture de la vanne de commande d'admission auxiliaire (17), à un degré d'ouverture proportionnel à l'état de fonctionnement du moteur.

4. Moteur à combustion interne (1) selon au moins l'une des revendications précédentes 1 à 3, **caractérisé en ce que** la vanne d'injection de carburant (20) est disposée pour injecter du carburant vers l'ouverture de soupape d'admission (3c), et **en ce que** l'ouverture d'extrémité en aval du passage d'admission auxiliaire (16) est disposée à la partie du passage d'admission au voisinage de l'ouverture de soupape d'admission (3c) afin de conférer à l'admission une directivité vers la chambre de combustion (3a), de telle sorte qu'une turbulence est produite dans la chambre de combustion (3a).

5. Moteur à combustion interne (1) selon la revendication 4, **caractérisé en ce que** le moyen de commande de vanne de commande (18) commande le degré d'ouverture de la vanne de commande de vitesse de ralenti (15c) et de la vanne de commande d'admission auxiliaire (17), proportionnellement à l'état de fonctionnement du moteur (1).

6. Moteur à combustion interne (1) selon la revendication 5, **caractérisé en ce que** le moyen de commande de vanne de commande (18) commande le degré d'ouverture de la vanne de commande d'admission auxiliaire (17) et de la vanne de commande de vitesse de ralenti (15c), de telle sorte que le débit d'admission est plus élevé à travers le passage d'admission auxiliaire (16) qu'à travers le passage de ralenti (15b), et le rapport air-carburant est plus pauvre qu'un rapport air-carburant stoechiométrique dans la plage de fonctionnement où l'occurrence d'une turbulence dans la chambre de combustion (3a) est requise comme dans le cas d'une opération de démarrage à froid et d'échauffement.

7. Moteur à combustion interne (1) selon au moins l'une des revendications précédentes 1 à 6, **caractérisé en ce que** la vanne d'injection de carburant (20) est disposée pour injecter du carburant vers l'ouverture de soupape d'admission (3c) et l'ouverture d'extrémité en aval du passage d'admission auxiliaire (16) est disposée sur le côté en amont de l'embouchure de la vanne d'injection de carburant (20), de telle sorte que l'admission, à partir de l'ouverture, s'écoule le long de la surface de la paroi du passage d'admission auxiliaire.

8. Moteur à combustion interne (1) selon la revendication 7, **caractérisé en ce que** le moyen de commande de vanne de commande (18) commande l'ouverture de la vanne de commande d'admission auxiliaire (17), de telle sorte que le débit d'admission à travers le passage d'admission auxiliaire (16) est plus élevé au cours de l'opération de démarrage à froid et d'échauffement qu'à la fin de l'opération d'échauffement, et le rapport air-carburant est supérieur au rapport air-carburant stoechiométrique.

9. Moteur à combustion interne (1) selon la revendication 7 ou 8, **caractérisé en ce que** le moyen de commande de vanne de commande (18) commande le degré d'ouverture de la vanne de commande d'admission auxiliaire (17), de telle sorte que le débit d'admission à travers le passage d'admission auxiliaire (16) convient pour conserver une vitesse de ralenti spécifiée, et le rapport air-carburant est approximativement au rapport air-carburant stoechiométrique.
